# EUROPEAN PATENT APPLICATION

(11) **EP 4 651 358 A1**
(43) Date of publication of application: **19.11.2025**
(21) Application number: 25175688.8
(22) Date of filing: 12.05.2025
(51) Int. Cl.: H02M 3/335, H02J 1/10

(54) **POWER CONVERSION APPARATUS, POWER SUPPLY SYSTEM, AND POWER CONVERSION CIRCUIT**

(30) Priority: 14.05.2024 JP 2024078506
(71) Applicant: DENSO WAVE INCORPORATED, Chita-gun, Aichi-pref. 470-2297 (JP)
(72) Inventor: OKUNISHI, Hiroaki, Chita-gun, Aichi-pref., 470-2297 (JP)
(74) Representative: Kuhnen & Wacker Patent- und Rechtsanwaltsbüro PartG mbB

(57) **Abstract**

A power conversion apparatus includes: a first DC-DC converter (first converter) and a second DC-DC converter (second converter) disposed in parallel with respect to a power load; and an inverter, and converts power supplied from a battery to the power load, from direct current to alternating current, using the first converter, the second converter, and the inverter. The first converter calculates a first target current value of the first converter on the basis of a present voltage value and a target voltage value of the first converter and outputs to the second converter a first value that is either the first target current value or a value correlated to the first target current value. The second converter calculates a second target current value of the second converter on the basis of the first value. The second target current value is lower than the first target current value.

## Description

### [Technical Field]

The present disclosure relates to a power conversion apparatus, a power supply system, and a power conversion circuit.

### [Background Art]

For example, as a power supply system applied to a building of a house or the like, a power supply system including a solar panel and a domestic-use battery is widely used. This power supply system supplies power from the domestic-use battery to a power load (i.e., an electric device) in the house via a power conversion apparatus (in detail, a power conversion circuit), for example, when a power failure occurs (see, for example, JP 2012-135125 A).

In addition, vehicles such as a plug-in hybrid vehicle (PHV) and an electric vehicle (EV) are recently being developed. Therefore, there is proposed a power supply system that is applied to a building of a house or the like, and is capable of charging those vehicles. Regarding this power supply system, a technique is being studied in which, when a power failure occurs in a state in which an in-vehicle battery is connected to the power supply system, power is supplied from the in-vehicle battery to a power load (i.e., an electric device) in the house via a power conversion apparatus (see, for example, JP 2020-178419 A).

### [Summary of the Invention]

Here, the power stored in a battery is limited. Therefore, in order to continue as long as possible the supply of power from the battery, it is desired to improve the conversion efficiency of a power conversion apparatus. Particularly, the timing of resuming the supply of power from a main power source such as a commercial power source may be indeterminate. In this case, continuing the supply of power from the battery longer even if only slightly and eliminating or shortening a period during which the power supply is ceased are technically effective. The power consumed by a power load (i.e., required power) is not necessarily always constant. The required power may vary according to the lapse of time or the like. A decrease in the responsiveness to this variation of required power (i.e., the variation of load) may lead to unstable operation of the power load. That is, for stabilization of the operation of the power load, it is desired to improve the responsiveness during the variation of load. As described above in detail, there is still room for improvement of the configuration of the power conversion apparatus when it comes to converting the power stored in a battery and supplying the converted power to a power load.

The present disclosure has been made in view of the problems described above, and a main object of the present disclosure is to provide a power conversion apparatus, a power supply system, and a power conversion circuit that are capable of improving the power conversion efficiency and improving the responsiveness to the variation of load.

A power conversion apparatus according to an aspect of the present disclosure includes: a first DC-DC (direct current-direct current) converter and a second DC-DC converter disposed in parallel with respect to a power load; and an inverter and converts power supplied from a battery to the power load, from direct current to alternating current, using the first DC-DC converter, the second DC-DC converter, and the inverter. The first DC-DC converter calculates a first target current value of the first DC-DC converter on the basis of a present voltage value and a target voltage value of the first DC-DC converter, controls a current value of the first DC-DC converter on the basis of the first target current value, and outputs to the second DC-DC converter a first value that is either the first target current value or a value correlated to the first target current value. The second DC-DC converter calculates a second target current value of the second DC-DC converter on the basis of the first value, and controls a current value of the second DC-DC-converter on the basis of the second target current value. The second target current value is lower than the first target current value.

A power supply system according to an aspect of the present disclosure is capable of supplying power from a battery to a power load when supply of power from a commercial power source to the power load is ceased. The power supply system comprises: a first DC-DC (direct current-direct current) converter and a second DC-DC converter disposed in parallel with respect to the power load; and an inverter and converts the power supplied from the battery to the power load, from direct current to alternating current, using the first DC-DC converter, the second DC-DC converter, and the inverter. The first DC-DC converter calculates a first target current value of the first DC-DC converter on the basis of a present voltage value and a target voltage value of the first DC-DC converter, controls a current value of the first DC-DC converter on the basis of the first target current value, and outputs to the second DC-DC converter a first value that is either the first target current value or a value correlated to the first target current value. The second DC-DC converter calculates a second target current value of the second DC-DC converter on the basis of the first value, and controls a current value of the second DC-DC-converter on the basis of the second target current value. The second target current value is lower than the first target current value.

A power conversion circuit according to an aspect of the present disclosure includes: a first DC-DC (direct current-direct current) converter and a second DC-DC converter disposed in parallel with respect to a power load; and an inverter and converts power supplied from a battery to the power load, from direct current to alternating current, using the first DC-DC converter, the second DC-DC converter, and the inverter. The first DC-DC converter calculates a first target current value of the first DC-DC converter on the basis of a present voltage value and a target voltage value of the first DC-DC converter, controls a current value of the first DC-DC converter on the basis of the first target current value, and outputs to the second DC-DC converter a first value that is either the first target current value or a value correlated to the first target current value. The second DC-DC converter calculates a second target current value of the second DC-DC converter on the basis of the first value, and controls a current value of the second DC-DC-converter on the basis of the second target current value. The second target current value is lower than the first target current value.

### [Brief Description of the Drawings]

Fig. 1 is a block diagram illustrating a power supply system according to one embodiment of the present disclosure.
Fig. 2 is a schematic diagram illustrating a first example of an isolated converter.
Fig. 3 is a timing chart illustrating the change of the supply of power in the first example of the isolated converter.
Fig. 4A is a schematic diagram illustrating a relationship between the conversion efficiency and the output of a DC-DC converter.
Fig. 4B is a schematic diagram illustrating a relationship between the driving aspect and the conversion efficiency of the first example of the isolated converter.
Fig. 5 is a schematic diagram illustrating a second example of the isolated converter.
Fig. 6 is a timing chart illustrating the change of the supply of power in the second example of the isolated converter.
Fig. 7 is a schematic diagram illustrating a third example of the isolated converter.
Fig. 8 is a timing chart illustrating the change of the supply of power in the third example of the isolated converter.
Fig. 9 is a schematic diagram illustrating a relationship between the driving aspect and the conversion efficiency of the third example of the isolated converter.
Fig. 10 is a schematic diagram illustrating a modified example of the isolated converter.
Fig. 11 is a hardware configuration diagram for control of the isolated converter.

### [Description of the Embodiment]

Hereinafter, one embodiment of the present disclosure will be described with reference to the drawings. A power supply system according to the present embodiment may be a power supply system for residential use.

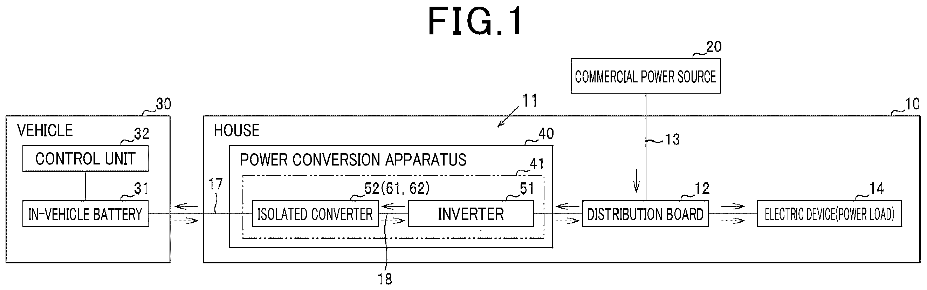

As illustrated in the block diagram of Fig. 1, a power supply system 11 applied to a house 10 includes a distribution board 12. The distribution board 12 is connected to a commercial power source (i.e., a system power source) 20 via a service line 13. In the commercial power source 20, the 6600-V AC power, which flows in a distribution line, has the voltage thereof stepped down to 100 V/200 V by a pole transformer provided on a power pole. The stepped-down power is supplied to the distribution board 12 via the service line 13. The distribution board 12 is connected to an electric device 14 (i.e., a power load) such as a light, an air conditioner, and a refrigerator. The power from the commercial power source 20 is supplied to those electric devices 14 via the distribution board 12.

The house 10 is provided with a parking space for a vehicle 30, which is adjacent to the building of the house. The vehicle 30 may be, for example, a plug-in hybrid vehicle (PHV) including an in-vehicle battery 31 for driving. A connection port, to which a vehicle power feed cable 17 is connectable, is provided on a side surface of the vehicle 30. The power supply system 11 includes a power conversion apparatus 40 installed next to the parking space. The power conversion apparatus 40 is connected to the vehicle 30 via the vehicle power feed cable 17. The power conversion apparatus 40 is connected to the distribution board 12 via a wire 18. That is, the vehicle 30 has an external power feed function. The vehicle power feed cable 17, the power conversion apparatus 40, the wire 18, and the distribution board 12 provide a path for supplying power from the commercial power source 20 to the vehicle 30.

The vehicle 30 includes a control unit 32 that, for example, monitors the storage state (i.e., the state of charge: SOC) of the in-vehicle battery 31 and controls the charge and discharge of the battery. The control unit 32 is communicable with the power supply system 11 (for example, the power conversion apparatus 40) of the house 10 via the vehicle power feed cable 17. When determining that the charge of the in-vehicle battery 31 is insufficient, the control unit 32 outputs a charge start request to the power supply system 11 (for example, the power conversion apparatus 40). The power supply system 11 supplies power to the vehicle 30 from the commercial power source 20 via the power conversion apparatus 40 when receiving the charge start request.

The power conversion apparatus 40 includes connectors, a substrate, and a housing. The connectors are connected to the vehicle power feed cable 17 and the wire 18. The substrate has a conversion circuit 41 mounted thereon. The housing houses the substrate. The conversion circuit 41 includes an inverter 51 and an isolated converter 52. The inverter 51 converts AC power from the commercial power source 20 to DC power. The isolated converter 52 separates the conversion circuit 41 into a house-10 side and a vehicle-30 side. The voltage of the in-vehicle battery 31 may be, for example, 300 V, and is higher than the voltage of the AC power supplied to the distribution board 12. The isolated converter 52 is a DC-DC (direct current-direct current) converter having a voltage step-up function. The DC power obtained through the conversion by the inverter 51 is stepped up to 350 V by the isolated converter 52, and then supplied to the vehicle 30.

The power supply system 11 according to the present embodiment is capable of supplying power from the in-vehicle battery 31 of the vehicle 30 to the house-10 side when a power failure occurs (that is, when the supply of power from the commercial power source 20 is stopped) in the house 10 due to a disaster or the like. Specifically, when detecting a power failure, the power supply system 11 outputs a power feeding request to the control unit 32 of the vehicle 30. When receiving the power feeding request, the control unit 32 starts supplying the power stored in the in-vehicle battery 31 to the house 10. It should be noted that the power may also be supplied from the in-vehicle battery 31 of the vehicle 30 to the house-10 side when the supply of power from the commercial power source 20 is unstable (for example, when power is short).

The solid arrows in Fig. 1 show the flow of power when the power is supplied from the commercial power source 20. The dashed arrows in Fig. 1 show the flow of power when the power is not supplied from the commercial power source 20 (for example, during a power failure).

Here, both the isolated converter 52 and the inverter 51 are of so-called bidirectional type. When power is supplied from the vehicle 30 to the house 10, DC power stepped up by the isolated converter 52 is converted to AC power by the inverter 51, and supplied to the electric device 14 via the distribution board 12. That is, the vehicle power feed cable 17, the power conversion apparatus 40, the wire 18, and the distribution board 12 provide a path for supplying power from the vehicle 30 to the electric device 14. The isolated converter 52 can also be configured to include both a step-up converter used for the supply of power from the commercial power source 20 to the in-vehicle battery 31 and a step-up converter used for the supply of power from the in-vehicle battery 31 to the electric device 14.

The isolated converter 52 according to the present embodiment includes a plurality of DC-DC converters disposed in parallel with respect to the power load for the purpose of improving the power conversion efficiency under low load. The isolated converter 52 according to the present embodiment includes two DC-DC converters. When the power load is lower than a threshold, one DC-DC converter is driven. On the other hand, when the power load is higher than the threshold, the plurality of DC-DC converters are driven. Thereby, power conversion loss of a transformer can be reduced compared with when a high-capacity transformer is employed in one DC-DC converter. That is, this configuration is advantageous to improve the conversion efficiency under low load.

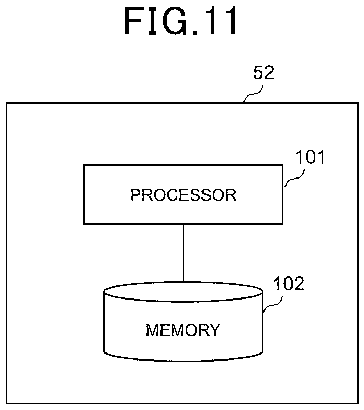

As illustrated in Fig. 11, the isolated converter 52 may include a processor 101 such as a CPU (central processing unit), and a memory 102 such as a ROM (read-only memory) and a RAM (random-access memory) as a microcomputer. By the processor 101 executing a program stored in the memory 102, the processing of the isolated converter 52 (e.g., the plurality of DC-DC converters included in the isolated converter 52) may be realized. Each of the plurality of DC-DC converters may include the microcomputer.

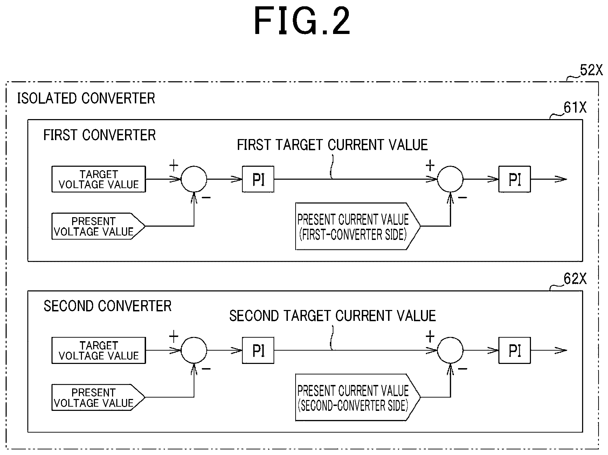

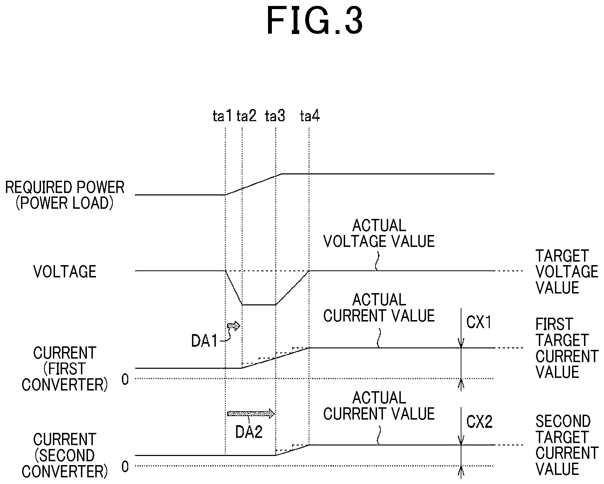

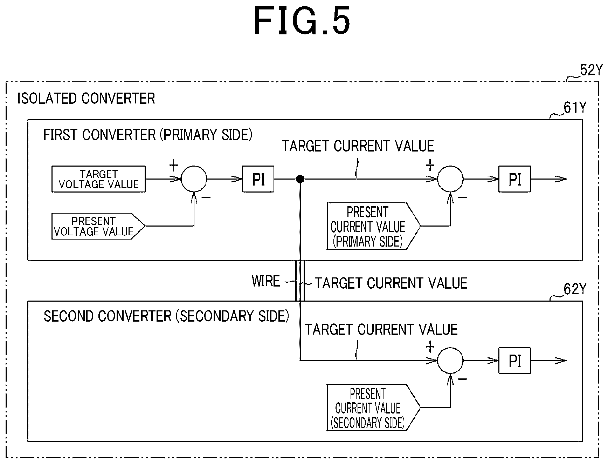

However, in a case where a plurality of DC-DC converters are disposed in parallel, a difference in conversion efficiency between the plurality of DC-DC converters may be generated depending on the relationship therebetween. Hereinafter, with reference to the examples of Figs. 2 to 6, cases in which a plurality of DC-DC converters are disposed in parallel will be described. For identifying each of the examples, the reference signs of a first example illustrated in Figs. 2 and 3 include "X", whereas the reference signs of a second example illustrated in Fig. 5 include "Y".

An isolated converter 52X illustrated in Fig. 2 includes a first converter 61X and a second converter 62X disposed in parallel. The first converter 61X determines a target current value (i.e., a first target current value) of the first converter 61X on the basis of the difference between a target voltage (for example, 350 V) for the first converter 61X and a present voltage of the first converter 61X. The first converter 61X performs a PI (proportional-integral) control so that the difference between a present current value of the first converter 61X and the first target current value becomes 0. Similarly to the first converter 61X, the second converter 62X determines a target current value (i.e., a second target current value) of the second converter 62X on the basis of the difference between a target voltage (for example, 350 V) for the second converter 62X and a present voltage of the second converter 62X. The second converter 62X performs a PI control so that the difference between a present current value of the second converter 62X and the second target current value becomes 0. It should be noted that the target voltage for the first converter 61X is identical with the target voltage for the second converter 62X.

A difference may be generated between the individuals, the first and second converters 61X, 62X, as to measurement results (i.e., analogue data) or a time lag of measurement of the present voltage, the present current, and the like. As a result, feedback controls performed using the measurement results cause a bias between the output of the first converter 61X and the output of the second converter 62X (i.e., causes unbalance in output between these converters). For example, in the example illustrated in Fig. 3, an increase of power load starts at a timing ta1. The first converter 61X detects the increase of power load (i.e., the decrease of the voltage value) and starts to raise the supplied power at a timing ta2 immediately after the timing ta1 at which the increase of power load has started. On the other hand, the second converter 62X detects the increase of power load (i.e., the decrease of the voltage value) and starts to raise the supplied power at a timing ta3 after the timing ta2. That is, due to the difference between the individuals described above, a response delay DA1 of the first converter 61X is relatively small, whereas a response delay DA2 of the second converter 62X is relatively large. After a timing ta4 at which the raise of the supplied power corresponding to the variation of load has been achieved, both the output of the first converter 61X and the output of the second converter 62 are stable. However, the difference generated between the supplied power (i.e., a current value CX1) of the first converter 61X and the supplied power (i.e., a current value CX2) of the second converter 62X is still large.

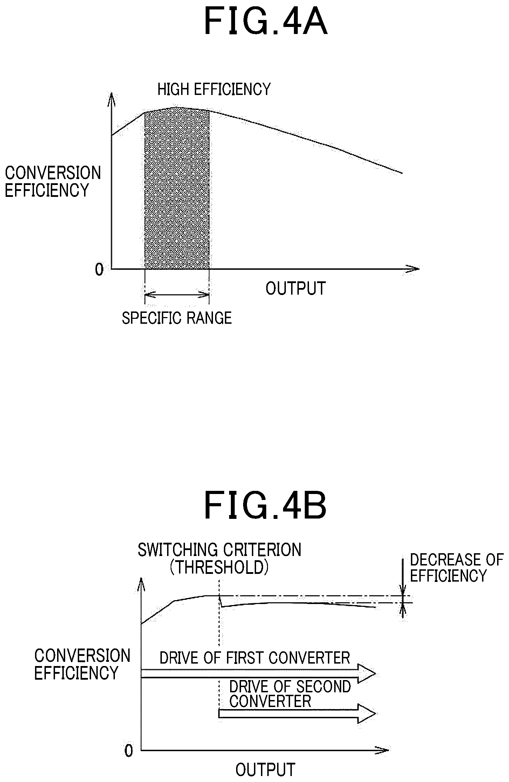

Here, as illustrated in Fig. 4A, the conversion efficiency of a DC-DC converter changes according to the magnitude of the output of the DC-DC converter (i.e., the amount of power and the amount of current). Specifically, the conversion efficiency is low in a case where the magnitude of the output is lower or higher than a specific range, compared with in a case where the magnitude of the output is within the specific range. In other words, in order to efficiently drive the DC-DC converter, it is desired to set the magnitude of the output to be within the specific range. Fig. 4B illustrates a case in which a converter drive state is switched from driving of one DC-DC converter to driving of two DC-DC converters by a trigger that works when the required power exceeds a criterion (i.e., a switching criterion). The conversion efficiency is lower in a state where the two DC-DC converters are driven than in a state where the one DC-DC converter is driven. When the difference in output between the two DC-DC converters is large, the decrease in conversion efficiency becomes significant.

That is, as illustrated in Fig. 2, in a case where the first converter 61X and the second converter 62X disposed in parallel are independently controlled, load may be concentrated on one DC-DC converter (for example, the first converter 61X illustrated in Fig. 3). Resultantly, it may be difficult to improve the conversion efficiency. Thus, it becomes difficult to achieve both the improvement of the responsiveness to the variation of load and the improvement of the conversion efficiency.

Here, the two DC-DC converters are set to have a master-slave (i.e., a primary-secondary) relationship. The primary converter controls the supply of power of the secondary converter. Thereby, the unbalance in output between those two DC-DC converters can be avoided. For example, an isolated converter 52Y illustrated in Fig. 5 includes a first converter 61Y and a second converter 62Y disposed in parallel. The first converter 61Y determines a target current value of the first converter 61Y on the basis of the difference between a target voltage (for example, 350 V) for the first converter 61Y and a present voltage of the first converter 61Y. For example, the target current value may be determined to a value dependent on the magnitude of the difference. The first converter 61Y performs a PI control so that the difference between a present current value of the first converter 61Y and the target current value becomes 0. As to the above, the isolated converter 52Y is the same as the isolated converter 52X. On the other hand, the first converter 61Y is connected to the second converter 62Y through a wire. The target current value of the first converter 61Y is input to the second converter 62Y. The second converter 62Y performs a PI control so that the difference between the target current value input and a present current value of the second converter 62Y becomes 0. As to the above, the isolated converter 52Y is different from the isolated converter 52X. That is, in the isolated converter 52Y, the first converter 61Y is operated as a primary converter, and the second converter 62Y as a secondary converter. Further, the second converter 62Y adjusts the output thereof using the target current value of the first converter 61Y.

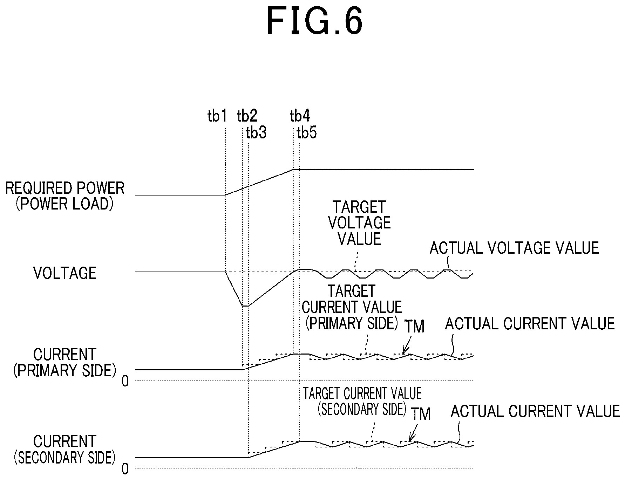

Thereby, as illustrated in the time chart of Fig. 6, the output (e.g., the magnitude of the output) of the second converter 62Y can approximate the output of the first converter 61Y. Thereby, the decrease of the conversion efficiency can be avoided that can be generated in a case where a plurality of DC-DC converters disposed in parallel are used in combination. Here, a case is considered in which the first converter 61Y and the second converter 62Y perform a feedback control of updating the target current value in a cyclic manner. In this case, a gap is generated between the timing at which the target current value calculated by the first converter 61Y is reflected in the feedback control of the first converter 61Y and the timing at which the target current value as a command value from the first converter 61Y is reflected in the feedback control of the second converter 62Y. That is, the operation of the second converter 62Y is delayed by the length of the gap of the cycle with respect to the operation of the first converter 61Y. It should be noted that the length of the gap may be at most one updating cycle.

In the example illustrated in Fig. 6, at a timing tb2 after a timing tb 1 at which a variation of load occurs, the first converter 61Y starts to raise the output thereof. At a timing tb3 after the timing tb2, the second converter 62Y starts to raise the output thereof. This time gap is maintained as constant during the drive of the first converter 61Y and the second converter 62Y. At a timing tb4, the present current value of the first converter 61Y operated as a primary converter reaches a maximum target value TM for the variation of load of this time. At a timing tb5, the present current value of the second converter 62Y operated as a secondary converter reaches the maximum target value TM for the variation of load of this time. By achieving the raise of the supplied power corresponding to the variation of load, the output from the first converter 61Y and the output from the second converter 62Y are expected to be stable after the achievement of the raise of the supplied power. However, due to the delay of the feedback control and the use of an identical target current value, the following phenomenon occurs. That is, in an identical section after the achievement of the raise of the supplied power, the movement (i.e., an increase or decrease of the output) for adjusting the output of the first converter 61Y may be opposite to the movement for adjusting the output of the second converter 62Y. This is because the present voltage fluctuates above and below the target voltage value. Resultantly, the output of the first converter 61Y and the second converter 62Y may become unstable. In other words, oscillation of the output may occur. The unstable output may thus prevent the improvement of the responsiveness to the variation of load.

As illustrated in Fig. 5, the second converter 62Y operates on the basis of the command value from the first converter 61Y. The first converter 61Y and the second converter 62Y control the output thereof using the same target current value. Thereby, the conversion efficiency can be improved. On the other hand, the improvement of the responsiveness to the variation of load may not be achieved.

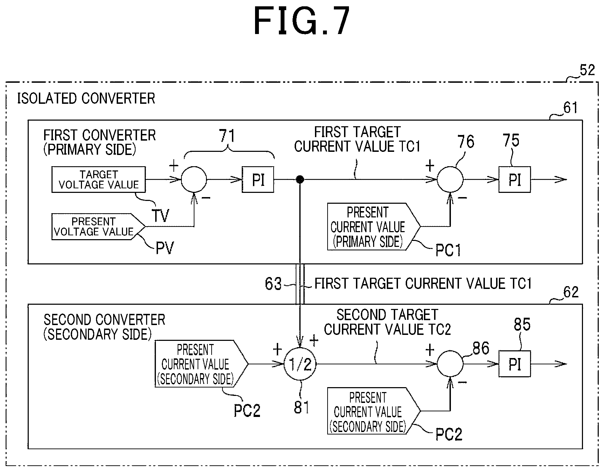

The isolated converter 52 according to the present embodiment achieves both the improvement of the responsiveness to the variation of load and the improvement of the conversion efficiency. Therefore, the isolated converter 52 has a different configuration from the configurations of the isolated converter 52X and the isolated converter 52Y. Hereinafter, the isolated converter 52 according to the present embodiment will be described with reference to the block diagram of Fig. 7.

As described above, the isolated converter 52 includes a first converter 61 and a second converter 62 disposed in parallel with respect to a power load. When the power load (required power or output) is lower than a switching criterion (i.e., a threshold), the first converter 61 is driven singly. When the power load is higher than the switching criterion (i.e., the threshold), both the first converter 61 and the second converter 62 are driven. Thus, the drive modes are switched. This switching between the drive modes is determined by the first converter 61. A target voltage (for example, 350 V), a characteristic of conversion efficiency, a control cycle (i.e., the updating cycle), and the like are common between the first converter 61 and the second converter 62 in the present embodiment.

The first converter 61 includes a voltage detector and a determiner 71. The voltage detector detects a present voltage value PV of the first converter 61. The determiner 71 determines a target current value (i.e., a first target current value TC1) on the basis of the present voltage value PV detected by the voltage detector and a target voltage value TV of the first converter 61. The first converter 61 also includes a current detector, a calculator 76, and a PI controller 75. The current detector detects a present output (specifically, a present current value PC1) of the first converter 61. The calculator 76 calculates a difference between the present current value PC1 detected by the current detector and the first target current value TC1 determined by the determiner 71. The PI controller 75 performs a feedback control (in detail, a PI control) on the basis of the difference calculated by the calculator 76, and adjusts the amount of current (i.e., the amount of power) to be supplied. That is, in the first converter 61, the supplied power is adjusted so that the present current value PC1 is coincident with the first target current value TC1. It should be noted that the feedback control of the first converter 61 is performed in a cyclic manner. By the feedback control, the first target current value TC1 and the like are updated. This cycle (i.e., the updating cycle) is set in association with a detection cycle of the voltage detector and the current detector provided in the first converter 61.

The first converter 61 is connected to the second converter 62 via a wire 63. The first target current value TC1 is output to the second converter 62 through the wire 63. The second converter 62 includes a current detector and a calculator 81. The current detector detects a present output (specifically, a present current value PC2) of the second converter 62. The calculator 81 calculates a second target current value TC2, which is a target current value of the second converter 62, by summing up at a prescribed ratio the present current value PC2 detected by the current detector and the first target current value TC1 input. In the present embodiment, the prescribed ratio may be 1 : 1. For example, the second target current value TC2 may be calculated by the following equation. Second target current value TC2 = Present current value PC2 × (1/2) + First target current value TC1 × (1/2)

The second converter 62 includes a calculator 86 and a PI controller 85. The calculator 86 calculates a difference between the present current value PC2 detected by the current detector and the second target current value TC2 calculated by the calculator 81. The PI controller 85 performs a feedback control (in detail, a PI control) on the basis of the difference calculated by the calculator 86, and adjusts the amount of current (i.e., the amount of power) to be supplied. That is, in the second converter 62, the supplied power is adjusted so that the present current value PC2 is coincident with the second target current value TC2. It should be noted that the feedback control of the second converter 62 is performed in the same cyclic manner as the first converter 61. By the feedback control, the second target current value TC2 and the like are updated.

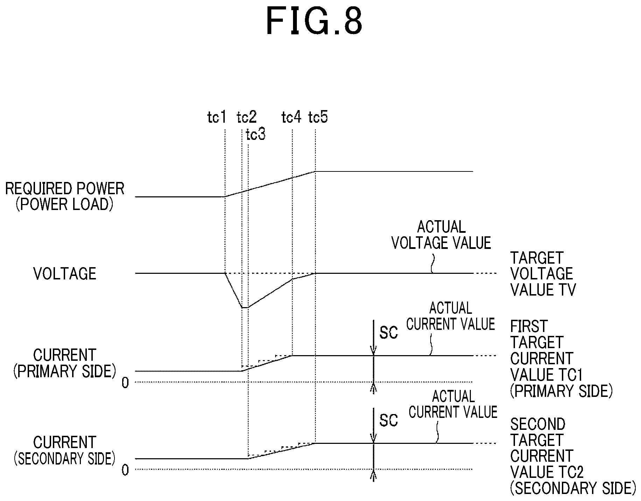

In the isolated converter 52 described in the present embodiment, the supplied power of the second converter 62 operated as a secondary converter is controlled on the basis of the command value input from the first converter 61 operated as a primary converter. This control is the same as that of the isolated converter 52Y described above. On the other hand, in the present embodiment, the second target current value TC2 of the second converter 62 is set to a lower value than the first target current value TC1 as the command value. In other words, the second target current value TC2 is adjusted to a lower value than the first target current value TC1. In addition, the equation described above allows a relationship of the second target current value TC2 < the first target current value TC1 to be maintained at least in a period from the generation of a variation of load (for example, an increase of required power) until the second target current value TC2 equaling the present current value PC2. Here, with reference to the timing chart of Fig. 8, the change of the supply of power from the in-vehicle battery 31 will be described. It should be noted that Fig. 8 illustrates the change of the supply of power in a case where a variation of load occurs during the supply of power from the in-vehicle battery 31 to the house 10 (i.e., the electric device 14).

At a timing tc1, the supply of power from the in-vehicle battery 31 to the house 10 is started. For example, an increase of required power (i.e., a variation of load) is generated in response to the electric device 14 (for example, a light) being turned on. Thereby, the voltage of the isolated converter 52 is decreased. By regular processing of the first converter 61 performed at a timing tc2 after the variation of load occurs, a voltage value of the first converter 61 is detected, and the first target current value TC1 is updated on the basis of the voltage value detected. Specifically, the first target current value TC1 is raised. Thereby, the supplied power is increased in response to the variation of load. Then, the first target current value TC1 updated is output to the second converter 62.

By a regular processing of the second converter 62, the second target current value TC2 is updated on the basis of the first target current value TC1 input and the present current value PC2. Specifically, the second target current value TC2 is raised. Thereby, the supplied power is increased in response to the variation of load.

Here, the calculation of the second target current value TC2 takes the present current value PC2 into consideration. The second target current value TC2 is suppressed to lower than the first target current value TC1. Thereby, the period (timings tc3 to tc5) taken for the present current value PC2 of the second converter 62 to reach the second target current value TC2 at which the present current value PC2 becomes steady (i.e., a steady-state value SC) is longer than the period (timings tc2 to tc4) taken for the present current value PC1 of the first converter 61 to reach the first target current value TC1 at which the present current value PC1 becomes steady (i.e., a steady-state value SC). That is, the increase rate of the second target current value TC2 is lower than the increase rate of the first target current value TC1. Resultantly, even in a case where the command value input to the second converter 62 after the timing tc4, at which the present current value PC1 of the first converter 61 reaches the steady-state value SC, is a value to increase the supplied power, the generation of oscillation illustrated in Fig. 6 is suppressed. It should be noted that the steady-state value SC is a current value in a state (i.e., a steady-state) where a variation in the present current value of each converter is stable. The present current value reaches a steady-state because a difference between the present current value and the target current value, which are inputs to the PI control, becomes substantially zero.

Particularly, the gap between the timing tc4 at which the present current value PC1 of the first converter 61 becomes the steady-state value SC and the timing tc5 at which the present current value PC2 of the second converter 62 becomes the steady-state value SC is generated. The gap may be longer than the updating cycle. That is, after the supply of power of the first converter 61 is stabilized, the present current value PC2 of the second converter 62 reaches the second target current value TC2 at which the present current value PC2 becomes steady, i.e., the value substantially equal to the first target current value TC1. Further, the increase rate of the present current value PC2 of the second converter 62 is small, and thus, the present current value PC2 mildly approaches the steady-state value SC. Therefore, the phenomenon (i.e., overshoot) in which the supplied power of the second converter 62 exceeds the steady-state value SC can be made less likely to occur.

The embodiment described above in detail is expected to give the following excellent effects.

A power conversion apparatus 40 (i.e., an isolated converter 52) described in the present embodiment includes a first converter 61 and a second converter 62 disposed in parallel with respect to a power load. The power conversion apparatus 40 including those first and second converters 61, 62 in combination can contribute to the improvement of the power conversion efficiency under low load.

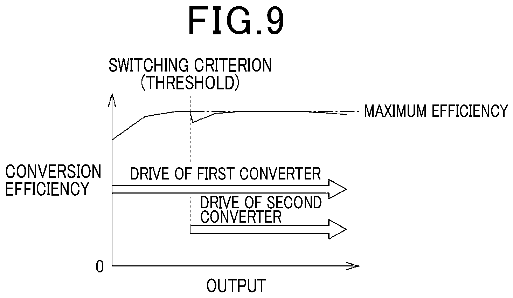

The second target current value TC2 of the second converter 62 operated as a secondary converter is set on the basis of the first target current value TC1 as a command value from the first converter 61 operated as a primary converter. Thereby, a bias in output can be suppressed that is generated between those first and second converters 61, 62 due to a difference between the individuals. As illustrated in Fig. 4, a DC-DC converter has a characteristic of changing the conversion efficiency according to the magnitude of the output thereof. In consideration of this characteristic, suppression of the bias in output between the first converter 61 and the second converter 62 is preferred to improve the conversion efficiency of the power conversion apparatus 40 (i.e., the isolated converter 52) as a whole. Particularly, when the power load (i.e., the required power) exceeds a switching criterion (i.e., a threshold), both the first converter 61 and the second converter 62 perform power conversion. Thus, even in a case where the first converter 61 and the second converter 62 are used in combination, the output of the first converter 61 and the second converter 62 can be kept within the specific range for high conversion efficiency. Thereby, as illustrated in Fig. 9, it is possible to prevent the conversion efficiency in a mode of driving the first converter 61 and the second converter 62 from being lower than the conversion efficiency in a mode of driving only one converter (for example, the first converter 61).

The second target current value TC2 of the second converter 62 is set on the basis of the first target current value TC1 as a command value from the first converter 61. Therefore, due to the delay of the feedback control of the second converter 62 (i.e., the delay of the updating cycle) with respect to the feedback control of the first converter 61, the operation of the second converter 62 is delayed with respect to the operation of the first converter 61. Specifically, a case is considered in which an identical target value (i.e., a target current value) is set for the first converter 61 and the second converter 62. In this case, after the preceding output of the first converter 61 operated as a primary converter becomes temporarily steady, the increase or decrease of the output of the first converter 61 may be opposite to the increase or decrease of the output of the second converter 62 due to the delay of the feedback control. That is, the output from the power conversion apparatus 40 oscillates, and it may take time for the output to be stable. This may prevent the improvement of the responsiveness to the variation of load. In this respect, in the power conversion apparatus 40 according to the present embodiment, the second target current value TC2 of the second converter 62 operated as a secondary converter is set to a lower value than the first target current value TC1 of the first converter 61 operated as a primary converter. In detail, the second target current value TC2 is set to a lower value than the first target current value TC1 at least until the present current value PC2 of the second converter 62 operated as a secondary converter reaches the second target current value TC2 at which the present current value PC2 becomes steady. In other words, the increase rate of the supplied power of the second converter 62 is set to a lower value than the increase rate of the supplied power of the first converter 61. Thus, the increase of the output of the second converter 62 is delayed with respect to the increase of the output of the first converter 61. Thereby, it is possible to suppress opposite movement in adjustment of the output (i.e., the increase or decrease of the output) between the first converter 61 and the second converter 62 due to the delay of the feedback control. This is preferred to prevent the supplied power from being unstable (i.e., the output from oscillating) and to improve the responsiveness to the variation of load.

As described above, the power conversion apparatus 40 according to the present embodiment can contribute to the improvement of the power conversion efficiency and the improvement of the responsiveness to the variation of load.

Particularly, the second target current value TC2 of the second converter 62 is set on the basis of the first target current value TC1 as a command value from the first converter 61 and the present current value PC2 of the second converter 62. In more detail, the second target current value TC2 is obtained by summing up half the first target current value TC1 and half the present current value PC2 of the second converter 62 at a prescribed ratio (for example, 1 : 1). That is, the second target current value TC2 is set to a lower value than the first target current value TC1. Thereby, the variation in amount of the output of the second converter 62 can appropriately be controlled. Therefore, excessive supply can be suppressed and generation of oscillation caused by the excessive supply can be suppressed when power is supplied in response to the variation of load.

The first converter 61 outputs a command value to the second converter 62, and the second target current value TC2 is set on the basis of the command value. This is to achieve the improvement of the responsiveness to the variation of load and the improvement of the conversion efficiency. On the other hand, complication of the configuration (for example, a circuit) related to the setting of the second target current value TC2 may prevent the improvement of operational stability and durability of the DC-DC converter. In this respect, as described in the present embodiment, the prescribed ratio is constant regardless of the present current value PC2 of the second converter 62. This contributes to simplifying the configuration for setting the second target current value TC2 and to improving the operational stability and the durability of the power conversion apparatus 40.

### <Other embodiments>

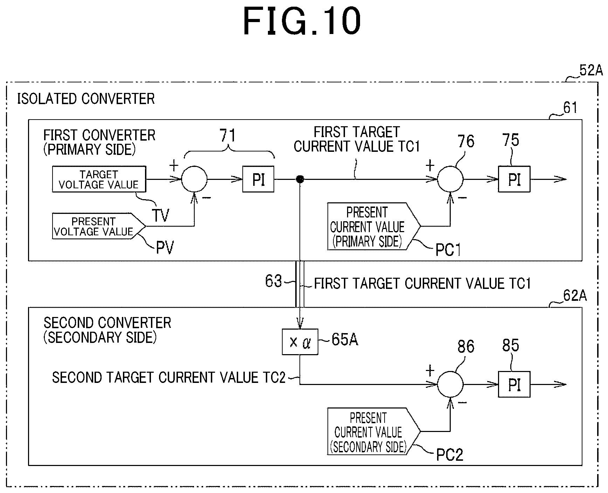

It should be noted that the present disclosure is not limited to the embodiment described above. For example, the embodiment may be modified as follows. The configurations described below may individually be applied to the embodiment, or a combination of some of or all the configurations described below may be applied to the embodiment.
(1) In the embodiment described above, the first converter 61 (corresponding to the first DC-DC converter) operated as a primary converter and the second converter 62 (corresponding to the second DC-DC converter) operated as a secondary converter are connected via the wire 63. The first target current value TC1 of the first converter 61 is input to the second-converter-62 side through the wire 63. However, any configuration can be applied as a configuration related to the input as long as it allows the input of the first target current value TC1 to the second converter 62. For example, the first converter 61 operated as a primary converter and the second converter 62 operated as a secondary converter may include communication units enabling mutual wireless communication. The communication unit may input the first target current value TC1 to the second converter 62 through the wireless communication.
(2) In the embodiment described above, the first converter 61 and the second converter 62 are driven to follow the variation of load. The first converter 61 is preferentially driven, and the second converter 62 is driven later. First, the present current value PC1 of the first converter 61 reaches the first target current value TC1 (i.e., the steady-state value SC) at which the present current value PC1 becomes steady. Thereafter, the present current value PC2 of the second converter 62 reaches the second target current value TC2 (i.e., the steady-state value SC) at which the present current value PC2 becomes steady. However, the magnitude of the output of the first converter 61 may be different from the magnitude of the output of the second converter 62. For example, a first steady-state value (i.e., a value in a state where the current value is constant) of the first converter 61 may be set separately from a second steady-state value (i.e., a value in a state where the current value is constant) of the second converter 62. The first steady-state value is the first target current value at which the present current value of the first converter 61 becomes steady. The second steady-state value is the second target current value at which the present current value of the second converter 62 becomes steady. The second steady-state value may be set to a lower value than the first steady-state value.
(3) In the embodiment described above, the present current value PC1 of the first converter 61 reaches the steady-state value SC, and then the present current value PC2 of the second converter 62 reaches the steady-state value at the timing at which a prescribed period longer than the updating cycle of the first converter 61 and the second converter 62 has lapsed. The prescribed period can be, for example, 5 times as long as the updating cycle. However, a prescribed period of any length can be applied as long as it enables suppression of the oscillation (see Fig. 6) attributed to the gap between the updating cycles. For example, the length of the prescribed period may be 4 times or 6 times the updating cycle. It should be noted that the prescribed period is preferably longer than at least twice the updating cycle in order to suppress the oscillation (see Fig. 6) attributed to the gap between the updating cycles.
(4) In the embodiment described above, the first target current value TC1 of the first converter 61 is input to the second converter 62. The second converter 62 calculates the second target current value TC2 by summing up the first target current value TC1 and the present current value PC2 of the second converter 62 at a prescribed ratio. The second target current value TC2 is lower than the first target current value TC1. However, any configuration for the calculation can be applied as long as it makes the second target current value TC2 lower than the first target current value TC1. For example, as illustrated in Fig. 10, a second converter 62A may include an adjuster 65A that adjusts the target current value. The adjuster 65A is disposed upstream of the PI controller 85 (specifically, upstream of the calculator 86). The adjuster 65A calculates the second target current value TC2 by multiplying the first target current value TC1 by a coefficient α smaller than 1. Also in this case, the second target current value TC2 is lower than the first target current value TC1.

The adjuster 65A illustrated in Fig. 10 may be placed at a location other than the second converter 62. For example, the adjuster 65A may be placed at the first converter 61, or may be placed outside the first converter 61 and the second converter 62. A correlation value, which is correlated to the first target current value TC1, may be calculated and input to the second converter 62 as a command value. The second converter 62 calculates a value to be input to the PI controller 85 (i.e., the difference between the command value and the present current value) on the basis of the command value. It should be noted that in a case where the second target current value TC2 is, as described later, adjusted in consideration of the present current value PC2 of the second converter 62, the adjuster 65A is preferably placed at the second converter 62. This is because such placement can reduce burden on the first converter 61 operated as a primary converter and contribute to the improvement of the performance of the isolated converter 52.

The coefficient α used in the adjuster 65A may be a fixed value (for example, 0.98). Alternatively, the coefficient α may be a variable that varies in tandem with the increase or decrease of the present current value PC2 of the second converter 62. For example, the coefficient α may be a variable that varies so as to approach 1 along with the increase of the actual current value. It should be noted that in a case where the coefficient α is a variable, the coefficient α may eventually become 1. This corresponds to the first target current value TC1 eventually matching the second target current value TC2 as described in the modified example (2). Alternatively, the coefficient α may eventually become a specific value smaller than 1. This corresponds to the second target current value TC2 remaining lower than the first target current value TC1.

It should be noted that by the adjuster 65A described above, the output of the second converter 62 operated as a secondary converter is made smaller than the output of the first converter 61 operated as a primary converter. The degree of adjustment performed by the adjuster 65A is changed along with the increase of the present current value PC2 of the second converter 62. However, instead, the degree of adjustment may be changed along with the lapse of time.

(5) In the embodiment described above, the first converter 61 and the second converter 62 are disposed in parallel with respect to a power load. However, the number of DC-DC converters disposed in parallel with respect to a power load is not limited to two. For example, the number of DC-DC converters may be three, four, or five or more. Also in this case, one DC-DC converter may be set as a converter operated as a primary converter, and the other DC-DC converters may be set as converters operated as secondary converters. Then, a target current value or a correlation value correlated to the target current value (for example, a value obtained by multiplying the target current value by the coefficient described above) may be input as a command value from the converter operated as a primary converter to the converters operated as secondary converters.

(6) In the embodiment described above, in order to set the second target current value, half the actual current value of the second converter 62 and half the first target current value are summed up. That is, the actual current value of the second converter 62 and the first target current value are summed up at a ratio of 1 : 1. However, the ratio is not limited to this ratio. For example, the ratio may be one that places more weight on one than on the other. That is, the actual current value of the second converter 62 and the first target current value may be weighted. Specifically, a case is considered in which the weight of the present current value PC2 is larger than the weight of the first target current value. For example, Present current value PC2 × (2/3) and First target current value TC1 × (1/3) may be summed up. Alternatively, Present current value PC2 × (3/5) and First target current value TC1 × (2/5) may be summed up. A case is also considered in which the weight of the first target current value TC1 is larger than the weight of the present current value PC2. For example, Present current value PC2 × (1/3) and First target current value TC1 × (2/3) may be summed up. Alternatively, Present current value PC2 × (2/5) and First target current value TC1 × (3/5) may be summed up.

(7) In the embodiment described above, the command value (i.e., the first target current value TC1) is adjusted, and then the second target current value TC2 of the second converter 62 is output. The output of the second converter 62 is suppressed. That is, the change of the output of the second converter 62 is milder than that of the first converter 61. However, the difference calculated by the calculator 86 (i.e., the value to be input to the PI controller 85) may be adjusted.

For example, the calculator 86 calculates the difference between the first target current value TC1 and the present current value PC2 as a tentative target value. Next, gain adjustment is performed on the tentative target value. The gain adjustment is performed by multiplying the tentative target value by a coefficient α (number smaller than 1). The value obtained by the gain adjustment is input to the PI controller 85. Thus, the value input to the PI controller 85 may be made smaller than the value input to the PI controller 75 of the first converter 61.

(8) In the embodiment described above, the second target current value TC2 of the second converter 62 is lower than the first target current value TC1 of the first converter 61. Thereby, the variation in amount of the output of the second converter 62 is suppressed. However, the first target current value TC1 may be lower than the second target current value TC2. Thereby, the variation in amount of the output of the first converter 61 is suppressed. Alternatively, suppressing the output of either the first converter 61 or the second converter 62 may be switched therebetween. This can reduce the bias in work between the first converter 61 and the second converter 62 during a long period.

(9) In the embodiment described above, when the supply of power from the commercial power source 20 is shut down due to a power failure or the like, power is supplied from the in-vehicle battery 31 (corresponding to the battery) mounted on the vehicle 30 to the electric device 14 (corresponding to the power load). The power from the in-vehicle battery 31 is converted from DC power to AC power by the power conversion apparatus 40. In place of or in addition to this, when the supply of power from the commercial power source 20 is shut down due to a power failure or the like, power may be supplied from a domestic-use battery, which is charged by a solar panel or the like, to the electric device 14 (corresponding to the power load). The power from the domestic-use battery may be converted from DC power to AC power by the power conversion apparatus 40 (or a configuration corresponding thereto). It should be noted that in the embodiment, the commercial power source 20 is a supply source of AC current. However, the supply source of AC power is not limited to this commercial power source 20. For example, the supply source of AC power may be an AC power generator (corresponding to the prescribed power source) such as a domestic-use AC power generator. A power supply system may be provided in which, when the supply of power from an AC power generator is stopped, power is supplied from the in-vehicle battery 31 or the domestic-use battery to the electric device 14. The configuration corresponding to the power conversion apparatus 40 described in the embodiment may be applied to the power supply system.

(10) In the embodiment described above, the power conversion apparatus 40 is applied to the power supply system 11 for residential use. However, the power supply system having the power conversion apparatus 40 applied thereto is not limited to this power supply system 11. For example, the configuration corresponding to the power conversion apparatus 40 may be applied to a power supply system capable of supplying power from a battery to a factory, an experiment facility, a medical facility, a server room, or the like.

### <Features extracted from the embodiment>

Hereinafter, features extracted from the embodiment described above will be described, as well as the effects and the like thereof as necessary. In the following, the configurations are, for easy understanding, appropriately described with parenthetic configurations corresponding thereto in the embodiment, but are not limited to these specific parenthetic configurations.

### (Feature 1)

A power conversion apparatus (power conversion apparatus 40) including: a first DC-DC converter (first converter 61) and a second DC-DC converter (second converter 62) disposed in parallel with respect to a power load (electric device 14); and an inverter (inverter 51), the power conversion apparatus converting power supplied from a battery (in-vehicle battery 31) to the power load, from direct current to alternating current, using the first DC-DC converter, the second DC-DC converter, and the inverter, wherein
the first DC-DC converter
calculates a first target current value (first target current value TC1) of the first DC-DC converter on the basis of a present voltage value (present voltage value PV) and a target voltage value (target voltage value TV) of the first DC-DC converter,
controls a current value of the first DC-DC converter on the basis of the first target current value, and
outputs to the second DC-DC converter a first value (command value) that is either the first target current value or a value correlated to the first target current value (value calculated by multiplying the first target current value TC1 by a coefficient);
the second DC-DC converter
calculates a second target current value (second target current value TC2) of the second DC-DC converter on the basis of the first value, and
controls a current value of the second DC-DC converter on the basis of the second target current value; and
the second target current value is lower than the first target current value.

In the power conversion apparatus according to the present feature, the second target current value of the second DC-DC converter is set on the basis of the command value from the first DC-DC converter. Thereby, a bias in output can be suppressed that is generated between those first and second DC-DC converters due to a difference between the individuals. The DC-DC converters have a characteristic of changing the conversion efficiency according to the magnitude of the output thereof. In consideration of this characteristic, suppression of the bias in output between the first DC-DC converter and the second DC-DC converter is preferred to improve the conversion efficiency of the power conversion apparatus as a whole.

On the other hand, the second target current value of the second DC-DC converter is set on the basis of the command value from the first DC-DC converter. Therefore, due to the delay of the feedback control (i.e., the delay of the updating cycle) of the second DC-DC converter with respect to the feedback control of the first DC-DC converter, the operation of the second DC-DC converter is delayed with respect to the operation of the first DC-DC converter. Specifically, a case is considered in which an identical target value is set for the first DC-DC converter and the second DC-DC converter. In this case, after the preceding output of the first DC-DC converter becomes temporarily steady, the increase or decrease of the output of the first DC-DC converter may be opposite to the increase or decrease of the output of the second DC-DC converter due to the delay of the feedback control. That is, the output from the power conversion apparatus oscillates, and it may take time for the output to be stable. This may prevent the improvement of the responsiveness to the variation of load. In this respect, according to the configuration of the present feature, the second target current value of the second DC-DC converter is set to a lower value than the first target current value of the first DC-DC converter. Since the second target current value is lower than the first target value, the increase of the output of the second DC-DC converter can be delayed with respect to the increase of the output of the first DC-DC converter. Thereby, the oscillation can be suppressed.

As described above, the power conversion apparatus according to the present feature can contribute to the improvement of the power conversion efficiency and the improvement of the responsiveness to the variation of load.

The present feature does not have to include that the first DC-DC converter calculates a first target current value (first target current value TC1) of the first DC-DC converter on the basis of a present voltage value (present voltage value PV) and a target voltage value (target voltage value TV) of the first DC-DC converter.

The power conversion apparatus according to the present feature may be applied to a power supply system (power supply system 11) capable of supplying power from a battery (in-vehicle battery 31) when the supply of power from a main power source (commercial power source 20) to a power load (electric device 14) is ceased or when power supplied from the commercial power source is short.

### (Feature 2)

The power conversion apparatus according to feature 1, wherein
when a variation of load occurs due to the power load increasing required power and supplying power changes so as to follow the variation of load, the second target current value is set lower than the first target current value, and
a second required period is adjusted to be longer than a first required period, the first required period being for increasing, by a prescribed amount, supplied power of the first DC-DC converter in response to the variation of load, and the second required period being for increasing, by the prescribed amount, supplied power of the second DC-DC converter in response to the variation of load.

Thus, the required time for increasing, by the prescribed amount, the output of the second DC-DC converter in response to the variation of load is longer than the required time for increasing, by the prescribed amount, the output of the first DC-DC converter. Therefore, it is possible to suppress opposite movement in adjustment of the output (i.e., the increase or decrease of the output) between the first DC-DC converter and the second DC-DC converter due to the delay of the updating cycle. This is preferred to prevent the supplied power from being unstable (i.e., the output from oscillating) and to improve the responsiveness to the variation of load.

### (Feature 3)

The power conversion apparatus according to feature 1 or 2, wherein
when a variation of load occurs due to the power load increasing required power and supplying power changes so as to follow the variation of load, the second target current value is set lower than the first target current value for at least a prescribed period, and
an increase rate of the supplied power of the second DC-DC converter is set lower than an increase rate of the supplied power of the first DC-DC converter.

Thus, by suppressing the second target value to lower than the first target value for at least a prescribed period, the increase rate of the supplied power of the second DC-DC converter is lower than the increase rate of the supplied power of the first DC-DC converter. Thereby, it is possible to suppress opposite movement in adjustment of the output (i.e., the increase or decrease of the output) between the first DC-DC converter and the second DC-DC converter due to the delay of the updating cycle. This is preferred to prevent the supplied power from being unstable (i.e., the output from oscillating) and to improve the responsiveness to the variation of load.

### (Feature 4)

The power conversion apparatus according to any one of features 1 to 3, wherein
the second target current value is set on the basis of the first value and a present current value of the second DC-DC converter.

Thus, the second target current value is set on the basis of the present current value of the second DC-DC converter that is a converter operated as a secondary converter. Thereby, the variation in amount of the output of the second DC-DC converter can be suppressed. Therefore, excessive supply can be suppressed and generation of oscillation caused by the excessive supply can be suppressed when power is supplied to make up for the variation of load.

### (Feature 5)

The power conversion apparatus according to any one of features 1 to 4, wherein
the first value is the first target current value, and
the second DC-DC converter calculates the second target current value by summing up the first target current value and the present current value of the second DC-DC converter at a prescribed ratio (for example, 1 : 1).

Thus, the second target value is set on the basis of the present current value of the second DC-DC converter that is a converter operated as a secondary converter. Thereby, the variation in amount of the output of the second DC-DC converter can be suppressed. This suppresses excessive supply of power when the power is supplied in response to the variation of load. As a result, generation of oscillation attributed to the excessive supply is suppressed. Further, the configuration for summing up the command value (i.e., the first value) and the present current value of the second DC-DC converter at a prescribed ratio can appropriately and easily accomplish setting the second target current value lower than the first target current value.

### (Feature 6)

The power conversion apparatus according to feature 5, wherein
the prescribed ratio is constant regardless of the present current value of the second DC-DC converter.

The first DC-DC converter outputs the command value to the second DC-DC converter, and the second target current value is set on the basis of the command value. This is preferred to improve the responsiveness to the variation of load and improve the conversion efficiency. On the other hand, complication of the configuration (for example, a circuit) related to the setting of the second target current value may prevent the improvement of operational stability and durability of the DC-DC converter. In this respect, the prescribed ratio of the present feature is a fixed value. This contributes to simplifying the configuration for setting the second target current value and to improving the operational stability and the durability of the power conversion apparatus.

### (Feature 7)

The power conversion apparatus according to feature 5, including a means for changing the prescribed ratio so as to set an allocation of the present current value of the second DC-DC converter larger than an allocation of the first target current value when the present current value of the second DC-DC converter increases.

Thereby, when the output of the second DC-DC converter is increased, the amount of increase of the output is suppressed to be low. Therefore, the oscillation attributed to the output of the second DC-DC converter can suitably be suppressed. For example, the allocation of the present current value in the prescribed ratio may be increased along with the increase of the present current value of the second DC-DC converter. Alternatively, the allocation of the present current value in the prescribed ratio may be increased along with the lapse of time.

### (Feature 8)

The power conversion apparatus according to any one of features 1 to 3, wherein
the first value is the first target current value, and
the second DC-DC converter calculates the second target current value lower than the first target current value by multiplying the first target current value by a prescribed coefficient.

Thus, by multiplying the first target current value by a prescribed coefficient, the second target current value lower than the first target current value is calculated. Thereby, a relationship of the first target current value > the second target current value can easily be accomplished. Further, this can reduce burden of a processing on the first DC-DC converter operated as a primary converter and contribute to the improvement of the performance of the power conversion apparatus as a whole.

### (Feature 9)

The power conversion apparatus according to any one of features 1 to 3, wherein
the first DC-DC converter outputs, as the command value, the correlated value calculated by multiplying the first target current value by a prescribed coefficient, to the second DC-DC converter.

Thereby, the configuration for calculating the second target current value of the second DC-DC converter operated as a secondary converter can be simplified. This is advantageous for increasing the number of second DC-DC converters operated as secondary converters.

### (Feature 10)

A power conversion apparatus (power conversion apparatus 40) including: a first DC-DC converter (first converter 61) and a second DC-DC converter (second converter 62) disposed in parallel with respect to a power load (electric device 14); and an inverter (inverter 51), the power conversion apparatus converting power supplied from a battery (in-vehicle battery 31) to the power load, from direct current to alternating current, using the first DC-DC converter, the second DC-DC converter, and the inverter, wherein
the first DC-DC converter outputs to the second DC-DC converter a first value (command value) that is either a first target current value (first target current value TC1) of the first DC-DC converter or a value correlated to the first target current value (value calculated by multiplying the first target current value TC1 by a coefficient);
the second DC-DC converter calculates a second target current value (second target current value TC2) of the second DC-DC converter on the basis of the first value; and
the second target current value is different from the first target current value.

The power conversion apparatus according to the present feature can contribute to the improvement of the power conversion efficiency and the improvement of the responsiveness to the variation of load.

### (Feature 11)

A power supply system (power supply system 11) capable of supplying power from a battery (in-vehicle battery 31) when supply of power from a commercial power source (commercial power source 20) to a power load (electric device 14) is ceased or when power supplied from the commercial power source is short,
the power supply system including: a first DC-DC converter (first converter 61) and a second DC-DC converter (second converter) disposed in parallel with respect to the power load; and an inverter (inverter 51), the power supply system converting the power supplied from the battery to the power load, from direct current to alternating current, using the first DC-DC converter, the second DC-DC converter, and the inverter, wherein
the first DC-DC converter
calculates a first target current value (for example, a first target current value TC1) of the first DC-DC converter on the basis of a present voltage value (present voltage value PV) and a target voltage value (target voltage value TV) of the first DC-DC converter,
controls a current value of the first DC-DC converter on the basis of the first target current value, and
outputs to the second DC-DC converter a first value (command value) that is either the first target current value or a value correlated to the first target current value (value calculated by multiplying the first target current value TC1 by a coefficient);
the second DC-DC converter
calculates a second target current value (for example, a second target current value TC2) of the second DC-DC converter on the basis of the first value, and
controls a current value of the second DC-DC-converter on the basis of the second target current value; and
the second target current value is lower than the first target current value.

The power supply system according to the present feature brings about the same effects as the power conversion apparatus according to feature 1.

It should be noted that the commercial power source of the present feature may be a prescribed power source.

### (Feature 12)

The power supply system according to feature 11, wherein
the second DC-DC converter adjusts the second target current value to lower than the first target current value for at least a prescribed period when the power supplied to the power load is increased in response to the variation of load of the power load.

Thus, the output of the second DC-DC converter is suppressed at least for a prescribed period. Thereby, the oscillation of the output can suitably be suppressed. It should be noted that the prescribed period preferably includes a period from the generation of the variation of load until the output of the first DC-DC converter becomes steady.

### (Feature 13)

A power conversion circuit (conversion circuit 41) including: a first DC-DC converter (first converter 61) and a second DC-DC converter (second converter 62) disposed in parallel with respect to a power load (electric device 14); and an inverter (inverter 51), the power conversion circuit converting power supplied from a battery (in-vehicle battery 31) to the power load, from direct current to alternating current, using the first DC-DC converter, the second DC-DC converter, and the inverter, wherein
the first DC-DC converter
calculates a first target current value (first target current value TC1) of the first DC-DC converter on the basis of a present voltage value (present voltage value PV) and a target voltage value (target voltage value TV) of the first DC-DC converter,
controls a current value of the first DC-DC converter on the basis of the first target current value, and
outputs to the second DC-DC converter a first value (command value) that is either the first target current value or a value correlated to the first target current value (value calculated by multiplying the first target current value TC1 by a coefficient);
the second DC-DC converter
calculates a second target current value (second target current value TC2) of the second DC-DC converter on the basis of the first value, and
controls a current value of the second DC-DC-converter on the basis of the second target current value; and
the second target current value is lower than the first target current value.

The power conversion circuit according to the present feature brings about the same effects as the power conversion apparatus according to feature 1.

## Claims

1. A power conversion apparatus comprising: a first DC-DC (direct current-direct current) converter and a second DC-DC converter disposed in parallel with respect to a power load; and an inverter, the power conversion apparatus converting power supplied from a battery to the power load, from direct current to alternating current, using the first DC-DC converter, the second DC-DC converter, and the inverter, wherein
the first DC-DC converter
calculates a first target current value of the first DC-DC converter on the basis of a present voltage value and a target voltage value of the first DC-DC converter,
controls a current value of the first DC-DC converter on the basis of the first target current value, and
outputs to the second DC-DC converter a first value that is either the first target current value or a value correlated to the first target current value;
the second DC-DC converter
calculates a second target current value of the second DC-DC converter on the basis of the first value, and
controls a current value of the second DC-DC-converter on the basis of the second target current value; and
the second target current value is lower than the first target current value.

2. The power conversion apparatus according to claim 1, wherein
the second target current value is calculated so that a period from the start of variation in a current value of the second DC-DC converter to stabilization of the current value of the second DC-DC converter is longer than a period from the start of variation in a current value of the first DC-DC converter to stabilization of the current value of the first DC-DC converter.

3. The power conversion apparatus according to claim 1 or 2, wherein
the second DC-DC converter calculates the second target current value on the basis of the first value and a present current value of the second DC-DC converter.

4. The power conversion apparatus according to claim 1 or 2, wherein
the first value is the first target current value, and
the second DC-DC converter calculates the second target current value by summing up the first target current value and the present current value of the second DC-DC converter at a prescribed ratio.

5. A power supply system capable of supplying power from a battery to a power load when supply of power from a commercial power source to the power load is ceased,
the power supply system comprising: a first DC-DC (direct current-direct current) converter and a second DC-DC converter disposed in parallel with respect to the power load; and an inverter, the power supply system converting the power supplied from the battery to the power load, from direct current to alternating current, using the first DC-DC converter, the second DC-DC converter, and the inverter, wherein
the first DC-DC converter
calculates a first target current value of the first DC-DC converter on the basis of a present voltage value and a target voltage value of the first DC-DC converter,
controls a current value of the first DC-DC converter on the basis of the first target current value, and
outputs to the second DC-DC converter a first value that is either the first target current value or a value correlated to the first target current value;
the second DC-DC converter
calculates a second target current value of the second DC-DC converter on the basis of the first value, and
controls a current value of the second DC-DC-converter on the basis of the second target current value; and
the second target current value is lower than the first target current value.

6. A power conversion circuit comprising: a first DC-DC (direct current-direct current) converter and a second DC-DC converter disposed in parallel with respect to a power load; and an inverter, the power conversion circuit converting power supplied from a battery to the power load, from direct current to alternating current, using the first DC-DC converter, the second DC-DC converter, and the inverter, wherein
the first DC-DC converter
calculates a first target current value of the first DC-DC converter on the basis of a present voltage value and a target voltage value of the first DC-DC converter,
controls a current value of the first DC-DC converter on the basis of the first target current value, and
outputs to the second DC-DC converter a first value that is either the first target current value or a value correlated to the first target current value;
the second DC-DC converter
calculates a second target current value of the second DC-DC converter on the basis of the first value, and
controls a current value of the second DC-DC-converter on the basis of the second target current value; and
the second target current value is lower than the first target current value.
